# EUROPÄISCHE PATENTANMELDUNG

(11) **EP 4 760 124 A1**
(43) Veröffentlichungstag der Anmeldung: **17.06.2026**
(21) Anmeldenummer: 24218777.1
(22) Anmeldetag: 10.12.2024
(51) Int. Cl.: F16H 55/06, F16H 55/12, F16H 55/17

(54) **ZAHNRAD, BAUGRUPPE SOWIE ZAHNRADGETRIEBE**

(71) Anmelder: IMS Gear SE & Co. KGaA, 78166 Donaueschingen (DE)
(72) Erfinder: Breithaupt, Sebastian, 78052 Marbach (DE)
(74) Vertreter: Westphal, Mussgnug & Partner Patentanwälte mbB

(57) **Zusammenfassung**

Zahnrad (16) für ein Zahnradgetriebe, umfassend
eine Drehachse (18) mit einer Axialrichtung (20) und einer Umfangsrichtung (22), mehrere, als separate Bauteile ausgebildete und in der Axialrichtung (20) aneinander angrenzend angeordnete Zahnradteile (24, 26, 50),
wobei jedes der Zahnradteile (24, 26, 50) einen um die Drehachse (18) umlaufend angeordneten Zahnkranz (28) aufweist, wobei die Zahnradteile (24, 26, 50) durch Verdrehen zueinander in der Umfangsrichtung (22) jeweils in einen gekoppelten Zustand bringbar sind, in dem die Zahnradteile (24, 26, 50) in der Axialrichtung (20) jeweils fest miteinander verbunden sind,
und wobei die Zahnradteile (24, 26, 50) in dem gekoppelten Zustand in der Umfangsrichtung (22) jeweils vorspannungsfrei zueinander angeordnet sind,
sowie Baugruppe (10) mit einem derartigen Zahnrad,
sowie Zahnradgetriebe mit einem derartigen Zahnrad.

## Beschreibung

Die Erfindung betrifft ein Zahnrad, eine Baugruppe mit einem derartigen Zahnrad sowie ein Zahnradgetriebe.

In vielen Bereichen der Technik kommen Getriebe mit Kunststoffzahnrädern zum Einsatz, so beispielsweise in Stellantrieben in Kraftfahrzeugen, im Antriebsstrang von elektrisch angetriebenen Fahrrädern oder in Industrieanwendungen. Insbesondere sind die in den dort eingesetzten Planetengetrieben angeordneten Planentenräder als Kunststoffzahnräder ausgebildet.

Bislang werden die Kunststoffzahnräder meist als Kunststoffspritzgussteile ausgeführt. Zur Befestigung der Kunststoffzahnräder auf einem Zentralelement, wie einer Welle oder einem Lager, wird das Zentralelement meist in das Spritzgusswerkzeug eingelegt und dann mit dem Kunststoff des zu fertigenden Zahnrads umspritzt. Bei Abkühlen des Kunststoffs treten in der Regel Schwundspannungen im Zahnrad auf, die bereits einen Großteil des zur Verfügung stehenden Festigkeitspotentials des Kunststoffs beanspruchen können. Dies kann in einer geringen Lebensdauer von derartigen Zahnrädern resultieren.

Darüber hinaus besteht bei dem beschriebenen Herstellverfahren die Gefahr, dass das in das Spritzgusswerkzeug eingelegte Zentralelement beim Umspritzen geschädigt wird. So kann beim Umspritzen von Wälzlagern, insbesondere mit hohen Werkzeugtemperaturen, Schmiermittel aus den Wälzlagern austreten. Das austretende Schmiermittel kann wiederum das Spritzgusswerkzeug oder den Kunststoff verunreinigen.

Aus dem Stand der Technik sind darüber hinaus mehrteilige Zahnradanordnungen mit einem Haupt- und einem Nebenzahnrad bekannt, die unabhängig von einem Zentralelement hergestellt und anschließend auf ein Zentralelement montiert werden können. Im montierten Zustand sind das Hauptzahnrad und das Nebenzahnrad in Umfangsrichtung um die Drehachse federbelastet gegeneinander vorgespannt. Eine derartige Anordnung dient der Eliminierung des Spiels zwischen miteinander kämmenden Zahnrädern. Als entsprechender druckschriftlicher Stand der Technik seien die folgenden Dokumente genannt: DE 10 2011 122 138 A1, US 2013 / 0 213 168 A1, US 2018 / 0 017 151 A1, und US 2013 / 0 112 027 A1.

Derartige Anordnungen werden hauptsächlich für metallische, beispielsweise pulvermetallurgisch hergestellte, Zahnräder verwendet. Nachteile dieser Anordnungen liegen mitunter in einer erhöhten Reibung im Zahneingriff und damit in einem erhöhten Verschleiß, sowie einem erhöhten Herstell-, insbesondere Montageaufwand. So muss die Befestigung einer derartigen Zahnradanordnung auf einem Zentralelement durch zusätzliche Fertigungs- und/oder Montageschritte erfolgen. Insbesondere ist bei den bekannten Beispielen eine separate Axialsicherung erforderlich.

Der Erfindung liegt daher die Aufgabe zugrunde, eine Zahnradanordnung bereitzustellen, die eine hohe Lebensdauer aufweist und einfach herstellbar ist.

Die Aufgabe wird erfindungsgemäß gelöst durch ein Zahnrad mit den Merkmalen des Patentanspruchs 1, eine Baugruppe mit den Merkmalen des Patentanspruchs 13 sowie ein Zahnradgetriebe mit den Merkmalen des Patentanspruchs 14.

Vorteilhafte Ausgestaltungen und Weiterbildungen der Erfindung sind in den abhängigen Ansprüchen angegeben.

Ein erfindungsgemäßes Zahnrad, insbesondere Stirnrad, für ein Zahnradgetriebe umfasst eine Drehachse mit einer Axialrichtung und einer Umfangsrichtung. Mit dem Begriff der Axialrichtung werden hier und im Folgenden vorzugsweise beide, einander entgegengesetzte Richtungen entlang der Drehachse bezeichnet. In entsprechender Weise können mit dem Begriff der Umfangsrichtung hier und im Folgenden beide, um die Drehachse umlaufende, einander entgegengesetzte, Richtungen verstanden werden. Die Axialrichtung ist vorzugsweise senkrecht zu der Umfangsrichtung angeordnet. Sofern nicht anders angegeben, sollen sich außerdem die hier und im Folgenden verwendeten Begriffe "axial" und "radial" auf die Drehachse beziehen.

Das erfindungsgemäße Zahnrad umfasst mehrere, als separate Bauteile ausgebildete und in der Axialrichtung aneinander angrenzend angeordnete Zahnradteile, wobei jedes der Zahnradteile einen um die Drehachse umlaufend angeordneten Zahnkranz aufweist. Vorzugsweise ist der Zahnkranz in der Umfangsrichtung umlaufend um die Drehachse angeordnet. Die Zahnradteile sind vorzugsweise koaxial zu der Drehachse angeordnet. Die Zahnradteile sind durch Verdrehen zueinander in der Umfangsrichtung jeweils in einen gekoppelten Zustand bringbar, in dem die Zahnradteile in der Axialrichtung jeweils fest miteinander verbunden sind. Damit muss vorzugsweise jedes der Zahnradteile gegenüber dem jeweils angrenzenden der Zahnradteile verdreht werden, um jeweils von einem entkoppelten Zustand in den gekoppelten Zustand gebracht zu werden. In dem gekoppelten Zustand können die Zahnradteile insbesondere jeweils formschlüssig miteinander verbunden sein. Durch die in der Axialrichtung fest miteinander verbundene Anordnung sind vorzugsweise Axialkräfte zwischen den sich im gekoppelten Zustand befindlichen Zahnradteilen übertragbar.

Erfindungsgemäß sind die Zahnradteile in dem gekoppelten Zustand in der Umfangsrichtung jeweils vorspannungsfrei zueinander angeordnet. Insbesondere ist das Zahnrad frei von einem Vorspannelement, wie beispielsweise einem Federelement, das eine Vorspannkraft zwischen den einzelnen Zahnradteilen initiieren würde. Dadurch kann ein verschleißarmes und einfach herstellbares Zahnrad bereitgestellt werden.

Vorzugsweise sind die Zahnradteile in dem gekoppelten Zustand jeweils in der Umfangsrichtung verdrehbar zueinander angeordnet. Im Eingriff mit einem Gegenrad des Zahnrads können sich die Zahnradteile dadurch an dem Gegenrad ausrichten, sodass das Zahnrad Toleranzen, wie beispielsweise Schiefstellungen oder Verformungen von Achsen ausgleichen kann.

Der Zahnkranz jedes der Zahnradteile kann mehrere Zähne mit jeweils senkrecht zu der Drehachse angeordneten Zahnstirnflächen aufweisen, wobei in dem gekoppelten Zustand aneinander angrenzende der Zahnradteile jeweils derart zueinander anordenbar sind, dass deren Zahnstirnflächen in der Axialrichtung einander gegenüberliegend angeordnet sind. Vorzugsweise ist damit keine der Zahnstirnflächen gegenüber einer zwischen den Zähnen angeordneten Zahnlücke angeordnet. Eine derartige Anordnung entspricht vorzugsweise der Anordnung der Zahnstirnflächen zueinander, wenn das Zahnrad mit dem Gegenrad im Eingriff steht. Damit können die Zahnradteile im Eingriff mit einem Gegenrad in der Axialrichtung fest miteinander verbunden sein. Vorzugsweise sind die Zahnstirnflächen aneinander angrenzender der Zahnradteile aneinander anliegend und besonders bevorzugt in der Umfangsrichtung versatzfrei zueinander angeordnet. In der Axialrichtung weist das Zahnrad vorzugsweise einen stetigen Zahnverlauf auf.

In einer bevorzugten Ausführungsform der Erfindung sind die Zahnradteile als Spritzgussteile, vorzugsweise als Kunststoffspritzgussteile, ausgebildet. Vorzugsweise ist jedes der Zahnradteile als Kunststoffspritzgussteil ausgebildet. Dadurch kann das Zahnrad in hohen Stückzahlen kostengünstig und mit einer hohen Genauigkeit hergestellt werden. Durch den Aufbau des Zahnrads aus den mehreren Zahnradteilen kann das Zahnrad einfach auf ein Zentralelement, wie ein Lager oder ein Welle, montiert werden.

Die Zahnradteile gleiche und/oder unterschiedliche Schrägungswinkel aufweisen. So können auf einfache Weise unterschiedliche Verzahnungsarten realisiert werden. Weisen sämtliche Zahnradteile denselben Schrägungswinkel auf, kann das Zahnrad damit gerad- oder schrägverzahnt ausgebildet werden. Mit zwei Zahnradteilen, deren Schrägungswinkel betragsmäßig gleich sind, sich aber im Vorzeichen unterscheiden, kann auf einfache Weise eine Pfeilverzahnung realisiert werden.

Vorzugsweise weist mindestens ein Zahnradteil der Zahnradteile mindestens ein erstes Kopplungselement auf. Besonders bevorzugt weist jedes der Zahnradteile mindestens ein erstes Kopplungselement auf. Das mindestens eine erste Kopplungselement kann an einer, vorzugsweise senkrecht zur Drehachse angeordneten, ersten Stirnfläche des mindestens einen Zahnradteils angeordnet sein. Vorzugsweise ist das mindestens eine erste Kopplungselement in der Axialrichtung über die erste Stirnfläche überstehend ausgebildet. Das mindestens eine Zahnradteil kann mehrere, vorzugsweise drei, erste Kopplungselemente des mindestens einen ersten Kopplungselemente umfassen, die gleichmäßig verteilt in der Umfangsrichtung angeordnet sein können.

Besonders bevorzugt weist mindestens ein Zahnradteil der Zahnradteile mindestens ein mit dem mindestens einen ersten Kopplungselement koppelbares zweites Kopplungselement auf. Durch Zusammenwirken des mindestens einen ersten Kopplungselements mit dem mindestens einen zweiten Kopplungselement kann so vorzugsweise der gekoppelte Zustand hergestellt werden. Vorzugsweise weist jedes der Zahnradteile mindestens ein mit dem mindestens einen ersten Kopplungselement koppelbares zweites Kopplungselement auf. Das mindestens eine zweite Kopplungselement kann der ersten Stirnfläche des mindestens einen Zahnradteils angeordnet sein. Vorzugsweise ist das mindestens eine zweite Kopplungselement als Aussparung ausgebildet, die bezüglich der ersten Stirnfläche in der Axialrichtung zurückversetzt ausgebildet ist. Das mindestens eine Zahnradteil kann mehrere, vorzugsweise drei, zweite Kopplungselemente des mindestens einen zweiten Kopplungselemente umfassen, die gleichmäßig verteilt in der Umfangsrichtung angeordnet sein können.

Vorzugsweise sind das mindestens eine erste Kopplungselement und das mindestens eine zweite Kopplungselement miteinander koppelbar, besonders bevorzugt durch Verdrehen der jeweiligen Zahnradteile zueinander in der Umfangsrichtung. Das mindestens eine erste Kopplungselement und das mindestens eine zweite Kopplungselement können jeweils einen Hinterschnitt aufweisen, wobei vorzugsweise der Hinterschnitt des mindestens einen ersten Kopplungselements mit dem Hinterschnitt des mindestens einen zweiten Kopplungselements in Eingriff bringbar ist. Das mindestens eine erste Kopplungselement und das mindestens eine zweite Kopplungselement können zusammen eine Kopplungseinheit nach Art eines Bajonettverschlusses ausbilden.

Bei Zahnradteilen, die angrenzend an zwei der Zahnradteile angeordnet sind, kann an der ersten Stirnfläche des jeweiligen Zahnradteils und an einer der ersten Stirnfläche in der Axialrichtung gegenüberliegend angeordneten zweiten Stirnfläche des Zahnradteils das mindestens eine erste Kopplungselement und/oder das mindestens eine zweite Kopplungselement in der zuvor beschriebenen Weise angeordnet sein.

Mindestens ein Zahnradteil der Zahnradteile weist vorzugsweise eine radial innerhalb des Zahnkranzes angeordnete Innenmantelfläche auf. Besonders bevorzugt weist jedes der Zahnradteile eine radial innerhalb des Zahnkranzes angeordnete Innenmantelfläche auf. Das mindestens eine zweite Kopplungselement kann als Aussparung in der Innenmantelfläche ausgebildet sein.

In einer bevorzugten Ausführungsform weist das mindestens eine Zahnradteil eine radial nach innen über die Innenmantelfläche überstehende und zumindest abschnittsweise um die Drehachse umlaufende Schulter auf. Die Schulter kann vollständig um die Drehachse umlaufen. Mittels der Schulter kann eine Axialkraft von dem Zahnrad auf das Zentralelement und umgekehrt übertragen werden. Vorzugsweise ist die Schulter an einem axialen Ende des mindestens einen Zahnradteils angeordnet, das besonders bevorzugt in der Axialrichtung der ersten Stirnfläche gegenüberliegend angeordnet ist.

Die Innenmantelfläche kann eine mindestens einen Mitnahmezahn aufweisende Mitnahmeverzahnung zur Übertragung von um die Drehachse wirkenden Drehmomenten aufweisen. Damit können die Drehmomente von dem mindestens einen Zahnradteil beispielsweise auf das Zentralelement übertragen werden. Vorzugsweise ist der mindestens eine Mitnahmezahn parallel zu der Axialrichtung angeordnet. In einer alternativen Ausführungsform der Innenmantelfläche kann die Innenmantelfläche frei von einer Mitnahmeverzahnung zur Übertragung von um die Drehachse wirkenden Drehmomenten sein. Vorzugsweise sind eine Mitnahmeverzahnung aufweisende Zahnradteile angrenzend an solche Zahnradteile angeordnet, deren Innenmantelfläche frei von einer Mitnahmeverzahnung ist. Dadurch kann eine Verdrehbarkeit der Zahnradteile ohne Innenmantelfläche gegenüber den Zahnradteilen mit Innenmantelfläche erreicht werden. So können die jeweiligen Zahnradteile in den gekoppelten Zustand gebracht werden.

In einer bevorzugten Ausführungsform der Erfindung weist das Zahnrad genau zwei oder genau drei der Zahnradteile auf. In einer derartigen Konstellation kann das Zahnrad besonders einfach montierbar sein.

In einer Weiterbildung der Erfindung sind zwei der Zahnradteile identisch ausgebildet. Besonders bevorzugt weist das Zahnrad genau zwei der Zahnradteile auf, wobei diese Zahnradteile identisch ausgebildet sind.

Eine erfindungsgemäße Baugruppe umfasst das vorstehend beschriebene Zahnrad und ein radial innerhalb des Zahnkranzes angeordnetes Zentralelement, wobei das Zentralelement als Welle oder Lager ausgebildet ist. Das Lager kann insbesondere als Wälzlager ausgebildet sein. Das Zentralelement ist vorzugsweise anliegend an die Innenmantelfläche ausgebildet. Eine Passung zwischen der Innenmantelfläche und dem Zentralelement kann als Übergangspassung oder Presspassung ausgebildet sein.

Ein erfindungsgemäßes Zahnradgetriebe umfasst mindestens ein vorstehend beschriebenes Zahnrad und/oder eine vorstehend beschriebene Baugruppe sowie ein mit dem mindestens einen Zahnrad kämmendes Gegenrad, wobei das Gegenrad mit jedem der Zahnradteile im Eingriff steht. Durch das in Eingriff stehende Gegenrad können die Zahnradteile des mindestens einen Zahnrads höchstens im Rahmen des Zahnspiels in der Umfangsrichtung gegeneinander verdrehbar sein. Damit kann ein Aufheben des gekoppelten Zustands durch Verdrehen der Zahnradteile zueinander verhindert werden.

In einer möglichen Ausführungsform ist das Zahnradgetriebe als Planetengetriebe mit mindestens einem Planetenrad ausgebildet ist, wobei das mindestens eine Planetenrad durch das mindestens eine Zahnrad gebildet ist.

Als ein Anwendungsfall ist ein Stellantrieb eines Kraftfahrzeugs vorstellbar, der das zuvor beschriebene Zahnradgetriebe aufweist. Als weiterer Anwendungsfall ist ein Antriebsstrang eines elektrisch angetriebenen Fahrrads oder eines elektrisch angetriebenen Kleinkraftrads denkbar, der das zuvor beschriebene Zahnradgetriebe aufweist.

Ausführungsbeispiele der Erfindung werden anhand der nachfolgenden Figuren erläutert. Es zeigt:
- Figur 1: eine Explosionsansicht eines ersten Ausführungsbeispiels einer Baugruppe,
- Figur 2: eine perspektivische Ansicht des in Fig. 1 gezeigten Ausführungsbeispiels,
- Figur 3: eine perspektivische Ansicht der Zahnradteile des in Fig. 1 gezeigten Ausführungsbeispiels,
- Figur 4: eine Explosionsansicht eines zweiten Ausführungsbeispiels einer Baugruppe,
- Figur 5: eine perspektivische Ansicht des in Fig. 4 gezeigten Ausführungsbeispiels,
- Figur 6: eine Explosionsansicht eines dritten Ausführungsbeispiels einer Baugruppe,
- Figur 7: eine perspektivische Ansicht des in Fig. 6 gezeigten Ausführungsbeispiels.

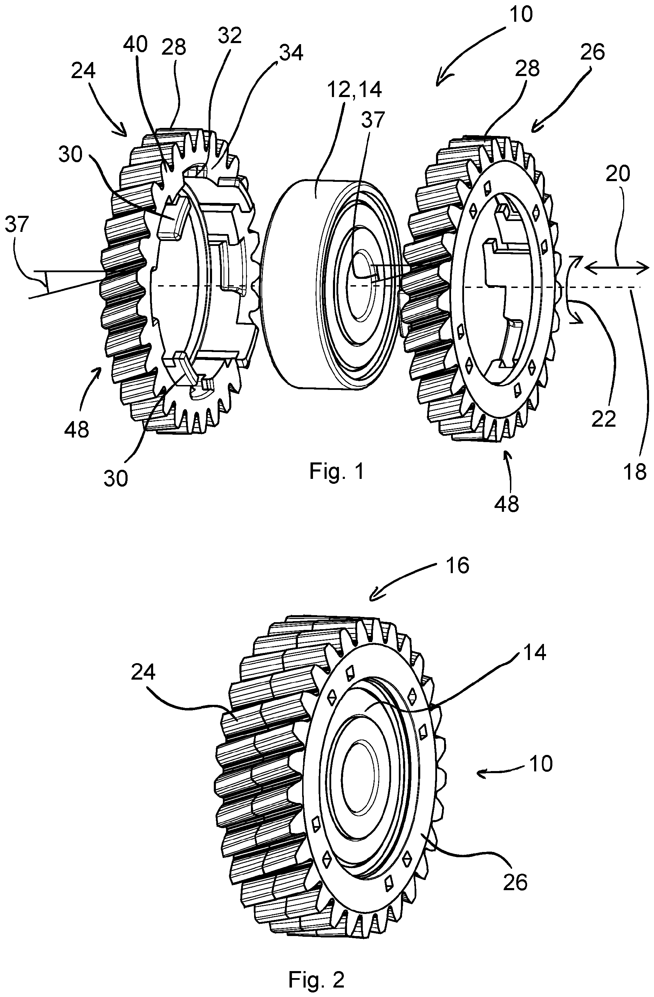

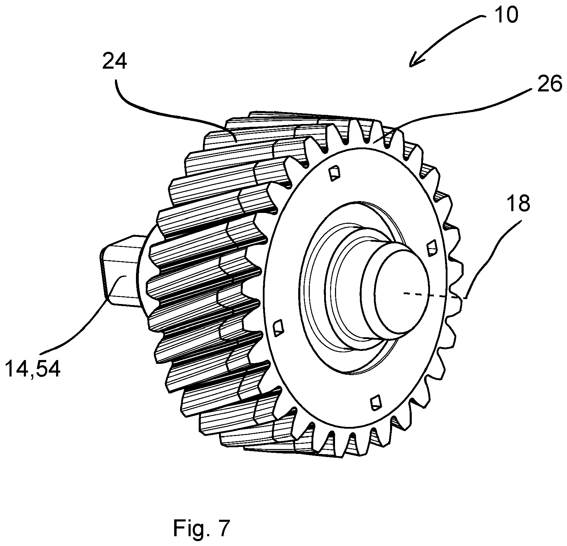

Die Figuren 1 bis 7 zeigen verschiedene Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Die Fig. 1 u. 2 zeigen ein erstes Ausführungsbeispiel einer Baugruppe 10, anhand dessen die Anordnung exemplarisch ausführlich erläutert werden soll. Die Baugruppe 10 umfasst ein als Lager 12, vorzugsweise als Wälzlager, ausgebildetes Zentralelement 14 sowie ein als Stirnrad ausgebildetes Zahnrad 16. Das Zahnrad 16 umfasst eine Drehachse 18 mit einer Axialrichtung 20 und einer senkrecht zu der Axialrichtung 20 angeordneten Umfangsrichtung 22.

Das in Fig. 1 gezeigte Zahnrad 16 umfasst ein erstes Zahnradteil 24 und ein zweites Zahnradteil 26, die als separate Bauteile ausgebildete und in der Axialrichtung 20 aneinander angrenzend angeordnet sind. Jedes der Zahnradteile 24, 26 weist einen in der Umfangsrichtung 22 um die Drehachse 18 umlaufend angeordneten Zahnkranz 28 auf. Die Zahnradteile 24, 26 sind vorzugsweise koaxial zu der Drehachse 18 angeordnet. Die Zahnradteile 24, 26 sind durch Verdrehen zueinander in der Umfangsrichtung 22 in einen gekoppelten Zustand bringbar, in dem die Zahnradteile 24, 26 in der Axialrichtung 20 fest miteinander verbunden sind, sodass Axialkräfte zwischen den Zahnradteilen 24, 26 übertragbar sind. Während in Fig. 1 eine Explosionsansicht der Baugruppe 10 gezeigt ist, sind die Zahnradteile 24, 26 in Fig. 2 in dem gekoppelten Zustand dargestellt.

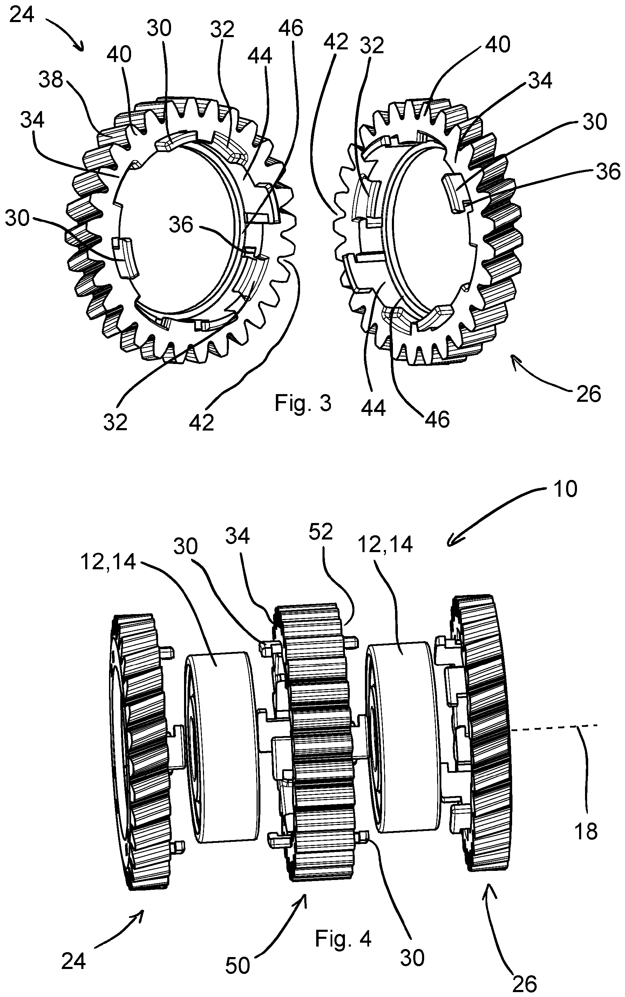

Wie insbesondere Fig. 3 zeigt, weist zum Herstellen des gekoppelten Zustands der Zahnradteile 24, 26 jedes der Zahnradteile 24, 26 drei erste Kopplungselemente 30 und drei mit den ersten Kopplungselementen 30 koppelbare zweite Kopplungselemente 32 auf. Jedes der Zahnradteile 24, 26 weist eine senkrecht zur Drehachse 18 angeordnete erste Stirnfläche 34 auf. Die ersten Kopplungselemente 30 und die zweiten Kopplungselemente 32 sind an der ersten Stirnfläche 34 des ersten Zahnradteils 24 und an der ersten Stirnfläche 34 des zweiten Zahnradteils 26 jeweils gleichmäßig verteilt in der Umfangsrichtung 22 angeordnet.

Die ersten Kopplungselemente 30 sind in der Axialrichtung 20 über die erste Stirnfläche 34 überstehend ausgebildet. Die zweiten Kopplungselemente 32 sind als Aussparung ausgebildet, die bezüglich der ersten Stirnfläche 34 in der Axialrichtung 20 zurückversetzt ausgebildet sind. Jedes der ersten Kopplungselemente 30 und jedes der zweiten Kopplungselemente 32 weist einen Hinterschnitt 36 auf. Dabei sind die Hinterschnitte 36 der ersten Kopplungselemente 30 und die Hinterschnitte 36 der zweiten Kopplungselemente 32 miteinander in Eingriff bringbar durch Verdrehen der Zahnradteile 24, 26 zueinander in der Umfangsrichtung 22. Die ersten Kopplungselemente 30 die zweiten Kopplungselemente 32 bilden so eine Kopplungseinheit nach Art eines Bajonettverschlusses aus. In dem gekoppelten Zustand sind die Zahnradteile 24, 26 so insbesondere formschlüssig miteinander verbunden.

Insbesondere in Fig. 3 ist erkennbar, dass die Zahnradteile 24, 26 in dem gekoppelten Zustand soweit es die Hinterschnitte 36 zulassen, in der Umfangsrichtung 22 verdrehbar zueinander angeordnet sind. Im Eingriff mit einem Gegenrad des Zahnrads 16 können sich die Zahnradteile 24, 26 dadurch an dem Gegenrad ausrichten, sodass das Zahnrad 16 Toleranzen, wie beispielsweise Schiefstellungen oder Verformungen von Achsen ausgleichen kann. Aus Fig. 3 ist außerdem erkennbar, dass in dem ersten Ausführungsbeispiel das erste Zahnradteil 24 und das zweite Zahnradteil 26 identisch ausgebildet sind. Wie die Fig. 1 zeigt, weisen das erste Zahnradteil 24 und das zweite Zahnradteil 26 insbesondere identische Schrägungswinkel 37 auf.

Wie insbesondere anhand der Fig. 1 nachvollziehbar ist, sind die Zahnradteile 24, 26 in dem gekoppelten Zustand in der Umfangsrichtung 22 vorspannungsfrei zueinander angeordnet. Insbesondere ist das Zahnrad 16 frei von einem Vorspannelement, wie beispielsweise einem Federelement, das eine Vorspannkraft zwischen den Zahnradteilen 24, 26 initiieren würde.

Wie die Fig. 1 u. 3 zeigen, weist der Zahnkranz 28 jedes der Zahnradteile 24, 26 mehrere Zähne 38 mit jeweils senkrecht zu der Drehachse 18 angeordneten Zahnstirnflächen 40 auf. In dem gekoppelten Zustand sind die aneinander angrenzenden Zahnradteile 24, 26 derart zueinander anordenbar, dass deren Zahnstirnflächen 40 in der Axialrichtung 20 einander gegenüberliegend angeordnet sind. Insbesondere ist damit keine der Zahnstirnflächen 40 gegenüber einer zwischen den Zähnen 38 angeordneten Zahnlücke 42 angeordnet. Damit können die Zahnradteile 24, 26 im Eingriff mit einem Gegenrad in der Axialrichtung 20 fest miteinander verbunden sein. Wie insbesondere die Fig. 2 zeigt, sind die Zahnstirnflächen 40 der aneinander angrenzenden Zahnradteile 24, 26 aneinander anliegend und in der Umfangsrichtung 22 versatzfrei zueinander angeordnet.

Die Fig. 1 u. 3 zeigen weiter, dass die Zahnradteile 24, 26 jeweils eine radial innerhalb des Zahnkranzes 28 angeordnete Innenmantelfläche 44 aufweisen. Dabei ist das Zentralelement 14 anliegend an die Innenmantelfläche 44 ausgebildet. Die zweiten Kopplungselemente 32 sind jeweils als Aussparung in der Innenmantelfläche 44 ausgebildet.

Das erste Zahnradteil 24 und das zweite Zahnradteil 26 weisen jeweils eine radial nach innen über die Innenmantelfläche 44 überstehende und vollständig um die Drehachse 18 umlaufende Schulter 46 auf. Das Zentralelement 14 ist jeweils an der Schulter 46 anliegend angeordnet. Mittels der Schulter 46 kann so eine Axialkraft von dem Zahnrad 16 auf das Zentralelement 14 und umgekehrt übertragen werden. Die Schulter 46 ist jeweils an einem axialen Ende 48 des ersten Zahnradteils 24 bzw. des zweiten Zahnradteils 26 angeordnet, wobei das axiale Ende 48 jeweils in der Axialrichtung 20 der ersten Stirnfläche 34 gegenüberliegend angeordnet ist.

Mit Blick auf das in den Fig. 4 u. 5 gezeigte zweite Ausführungsbeispiel soll im Folgenden im Wesentlichen auf dessen Unterschiede gegenüber dem ersten Ausführungsbeispiel der Fig. 1 u. 2 eingegangen werden.

Die Fig. 4 zeigt, dass das Zentralelement 14 der Baugruppe 10 zwei Lager 12 umfasst. Was das Zahnrad 16 des zweiten Ausführungsbeispiels betrifft, sind das erste Zahnradteil 24 und das zweite Zahnradteil 26 ebenfalls identisch ausgebildet. Darüber hinaus weist das Zahnrad 16 ein als separates Bauteil ausgebildetes drittes Zahnradteil 50 auf, das in der Axialrichtung 20 zwischen dem ersten Zahnradteil 24 und dem zweiten Zahnradteil 26 angeordnet ist. Das dritte Zahnradteil 50 weist dabei vorzugsweise keine Schulter 46 auf.

Das dritte Zahnradteil 50 weist eine erste Stirnfläche 34 und eine der ersten Stirnfläche 34 in der Axialrichtung 20 gegenüberliegende und senkrecht zu der Drehachse 18 angeordnete zweite Stirnfläche 52 auf. Dabei ist die erste Stirnfläche 34 des dritten Zahnradteils 50 angrenzend an die erste Stirnfläche 34 des ersten Zahnradteils 24 angeordnet. Die zweite Stirnfläche 52 des dritten Zahnradteils 50 ist angrenzend an die erste Stirnfläche 34 des zweiten Zahnradteils 24 angeordnet Der Anordnung an den ersten Stirnflächen 34 des ersten Zahnradteils 24 und des zweiten Zahnradteils 26 entsprechend, weist das dritte Zahnradteil 50 an jeder seiner Stirnflächen 34, 52 drei erste Kopplungselemente 30 und drei mit den ersten Kopplungselementen 30 koppelbare zweite Kopplungselemente 32 auf. Die ersten Kopplungselemente 30 und die zweiten Kopplungselemente 32 sind jeweils gleichmäßig verteilt in der Umfangsrichtung 22 angeordnet. Das dritte Zahnradteil 50 ist so in der oben beschrieben Weise durch Verdrehen in der Umfangsrichtung 22 gegenüber dem ersten Zahnradteil 24 und dem zweiten Zahnradteil 26 mit dem ersten Zahnradteil 24 und dem zweiten Zahnradteil 26 jeweils in den gekoppelten Zustand bringbar.

Wie die Fig. 4 u. 5 zudem zeigen, ist das dritte Zahnradteil 50 geradverzahnt und weist damit einen Schrägungswinkel von 0° auf. Damit unterscheidet sich der Schrägungswinkel des dritten Zahnradteils 50 von dem Schrägungswinkel 37 des ersten Zahnradteils 24 und des zweiten Zahnradteils 26.

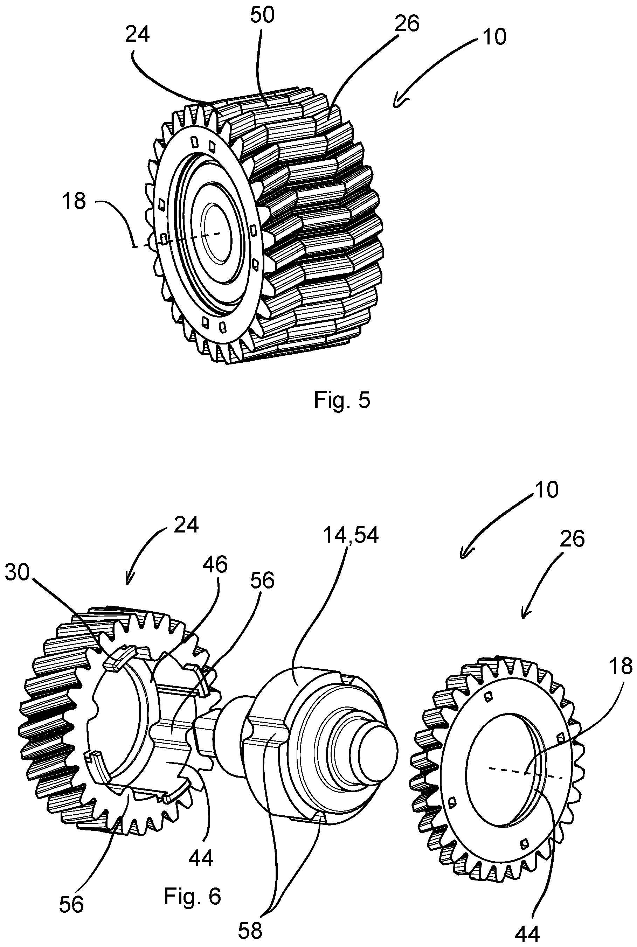

Mit Blick auf das in den Fig. 6 u. 7 gezeigte dritte Ausführungsbeispiel soll im Folgenden ebenfalls im Wesentlichen auf dessen Unterschiede gegenüber dem ersten Ausführungsbeispiel der Fig. 1 u. 2 eingegangen werden.

Wie insbesondere die Fig. 6 zeigt, ist bei der Baugruppe 10 des dritten Ausführungsbeispiels das Zentralelement 14 als Welle 54 ausgebildet. Das erste Zahnradteil 24 und das zweite Zahnradteil 26 sind individuell ausgebildet. So ist das erste Zahnradteil 24 in der Axialrichtung 20 breiter als das zweite Zahnradteil 26. Zudem weist die Innenmantelfläche 44 des ersten Zahnradteils 24 eine vier Mitnahmezähne 56 aufweisende Mitnahmeverzahnung zur Übertragung von um die Drehachse 18 wirkenden Drehmomenten auf. Die Mitnahmezähne 56 sind parallel zu der Axialrichtung 20 und eingreifend in Vertiefungen 58 der Welle 54 angeordnet. Die Innenmantelfläche 44 des an das erste Zahnradteil 24 angrenzenden zweiten Zahnradteils 26 ist frei von einer Mitnahmeverzahnung, die ein Drehmoment zwischen dem Zentralelement 14 und dem zweiten Zahnradteil 26 übertragen würde. Dadurch ist das zweite Zahnradteil 26 zu dem ersten Zahnradteil 24 in der Umfangsrichtung 22 verdrehbar, sodass das erste Zahnradteil 24 und das zweite Zahnradteil 26 in den gekoppelten Zustand gebracht werden können. Das Zahnrad 16 des dritten Ausführungsbeispiels kann so radial und axial auf der Welle 54 fixiert werden.

Das jeweilige erste Zahnradteil 24 und das jeweilige zweite Zahnradteil 26 der gezeigten Ausführungsbeispiele sowie das dritte Zahnradteil 50 des zweiten Ausführungsbeispiels sind vorzugsweise als Kunststoffspritzgussteile ausgebildet.

### Bezugszeichenliste

- 10: Baugruppe
- 12: Lager
- 14: Zentralelement
- 16: Zahnrad
- 18: Drehachse
- 20: Axialrichtung
- 22: Umfangsrichtung
- 24: erstes Zahnradteil
- 26: zweites Zahnradteil
- 28: Zahnkranz
- 30: erstes Kopplungselement
- 32: zweites Kopplungselement
- 34: erste Stirnfläche
- 36: Hinterschnitt
- 37: Schrägungswinkel
- 38: Zahn
- 40: Zahnstirnfläche
- 42: Zahnlücke
- 44: Innenmantelfläche
- 46: Schulter
- 48: axiales Ende
- 50: drittes Zahnradteil
- 52: zweite Stirnfläche
- 54: Welle
- 56: Mitnahmezahn
- 58: Vertiefungen

## Patentansprüche

1. Zahnrad (16), insbesondere Stirnrad, für ein Zahnradgetriebe, umfassend
eine Drehachse (18) mit einer Axialrichtung (20) und einer Umfangsrichtung (22), mehrere, als separate Bauteile ausgebildete und in der Axialrichtung (20) aneinander angrenzend angeordnete Zahnradteile (24, 26, 50),
wobei jedes der Zahnradteile (24, 26, 50) einen um die Drehachse (18) umlaufend angeordneten Zahnkranz (28) aufweist,
und wobei die Zahnradteile (24, 26, 50) durch Verdrehen zueinander in der Umfangsrichtung (22) jeweils in einen gekoppelten Zustand bringbar sind, in dem die Zahnradteile (24, 26, 50) in der Axialrichtung (20) jeweils fest miteinander verbunden sind,
**dadurch gekennzeichnet, dass**
die Zahnradteile (24, 26, 50) in dem gekoppelten Zustand in der Umfangsrichtung (22) jeweils vorspannungsfrei zueinander angeordnet sind.

2. Zahnrad nach Anspruch 1,
**dadurch gekennzeichnet, dass**
die Zahnradteile (24, 26, 50) in dem gekoppelten Zustand jeweils in der Umfangsrichtung (22) verdrehbar zueinander angeordnet sind.

3. Zahnrad nach einem der vorhergehenden Ansprüche,
**dadurch gekennzeichnet, dass**
der Zahnkranz (28) jedes der Zahnradteile (24, 26, 50) mehrere Zähne (38) mit jeweils senkrecht zu der Drehachse (18) angeordneten Zahnstirnflächen (40) aufweist, wobei in dem gekoppelten Zustand aneinander angrenzende der Zahnradteile (24, 26, 50) jeweils derart zueinander anordenbar sind, dass deren Zahnstirnflächen (40) in der Axialrichtung (20) einander gegenüberliegend angeordnet sind.

4. Zahnrad nach einem der vorhergehenden Ansprüche,
**dadurch gekennzeichnet, dass**
die Zahnradteile (24, 26, 50) als Spritzgussteile, vorzugsweise als Kunststoffspritzgussteile, ausgebildet sind.

5. Zahnrad nach einem der vorhergehenden Ansprüche,
**dadurch gekennzeichnet, dass**
die Zahnradteile (24, 26, 50) gleiche und/oder unterschiedliche Schrägungswinkel (37) aufweisen.

6. Zahnrad nach einem der vorhergehenden Ansprüche,
**dadurch gekennzeichnet, dass** mindestens ein Zahnradteil der Zahnradteile (24, 26, 50) mindestens ein erstes Kopplungselement (30) aufweist.

7. Zahnrad nach Anspruch 6,
**dadurch gekennzeichnet, dass** mindestens ein Zahnradteil der Zahnradteile (24, 26, 50) mindestens ein mit dem mindestens einen ersten Kopplungselement (30) koppelbares zweites Kopplungselement (32) aufweist.

8. Zahnrad nach einem der vorhergehenden Ansprüche,
**dadurch gekennzeichnet, dass** mindestens ein Zahnradteil der Zahnradteile (24, 26, 50) eine radial innerhalb des Zahnkranzes (28) angeordnete Innenmantelfläche (44) aufweist.

9. Zahnrad nach Anspruch 8,
**dadurch gekennzeichnet, dass**
das mindestens eine Zahnradteil (24, 26) eine radial nach innen über die Innenmantelfläche (44) überstehende und zumindest abschnittsweise um die Drehachse (18) umlaufende Schulter (46) aufweist.

10. Zahnrad nach einem der Ansprüche 8 bis 9,
**dadurch gekennzeichnet, dass**
die Innenmantelfläche (44) eine mindestens einen Mitnahmezahn (56) aufweisende Mitnahmeverzahnung zur Übertragung von um die Drehachse (18) wirkenden Drehmomenten aufweist.

11. Zahnrad nach einem der vorhergehenden Ansprüche,
**dadurch gekennzeichnet, dass**
das Zahnrad (16) genau zwei oder genau drei der Zahnradteile (24, 26, 50) aufweist.

12. Zahnrad nach einem der vorhergehenden Ansprüche,
**dadurch gekennzeichnet, dass**
zwei der Zahnradteile (24, 26, 50) identisch ausgebildet sind.

13. Baugruppe (10) mit einem Zahnrad (16) nach einem der vorhergehenden Ansprüche und einem radial innerhalb des Zahnkranzes (28) angeordneten Zentralelement (14), wobei das Zentralelement (14) als Welle (54) oder Lager (12) ausgebildet ist.

14. Zahnradgetriebe mit mindestens einem Zahnrad (16) nach einem der Ansprüche 1 bis 12 und/oder einer Baugruppe (10) nach Anspruch 13 sowie einem mit dem mindestens einen Zahnrad (16) kämmenden Gegenrad, wobei das Gegenrad mit jedem der Zahnradteile (24, 26, 50) im Eingriff steht.

15. Zahnradgetriebe nach Anspruch 14,
**dadurch gekennzeichnet, dass**
das Zahnradgetriebe als Planetengetriebe mit mindestens einem Planetenrad ausgebildet ist, wobei das mindestens eine Planetenrad durch das mindestens eine Zahnrad (16) gebildet ist.
